Europäisches Patentamt

European Patent Office

Office européen des brevets

(11) Publication number: **0 494 318 A1**

# EUROPEAN PATENT APPLICATION

(21) Application number: **90117370.8**

(22) Date of filing: **10.09.90**

(51) Int. Cl.⁵: **A23L 1/325**

(30) Priority: **12.09.89 JP 236673/89**

(43) Date of publication of application:
**15.07.92 Bulletin 92/29**

(84) Designated Contracting States:
**AT BE CH DE DK ES FR GB GR IT LI LU NL SE**

(71) Applicant: **Yasuno, Shigeo**
**9-27 Toneri 4-chome Adachi-ku**
**Tokyo 121(JP)**

(72) Inventor: **Yasuno, Shigeo**
**9-27 Toneri 4-chome Adachi-ku**
**Tokyo 121(JP)**

(74) Representative: **Klingseisen, Franz, Dipl.-Ing.**
**et al**
**Dr. F. Zumstein Dipl.-Ing. F. Klingseisen**
**Bräuhausstrasse 4**
**W-8000 München 2(DE)**

(54) **Imitation product of slice of fish and production method therof.**

(57) This invention discloses an imitation product of a slice of fish characterized in that cut portions or portions analogous to the cut portions are appropriately formed in the fish meat portion obtained by kneading the ground meat of fish and a fibrous material to form a paste and shaping the paste in the shape of a slice of fish.

The product of the invention has appearance, feel and taste and flavor approximate to those of the real fish meat and is easily edible because it has no bone. The product is suitable for mass-production.

# FIG.4

( A )

( B )

( C )

## IMITATION PRODUCT OF SLICE OF FISH AND PRODUCTION METHOD THEREOF

### BACKGROUND OF THE INVENTION:

Field of the Invention:

This invention relates to an imitation product of a slice of fish and more particularly, to a product which consists of the ground fish meat and a fibrous material as its principal materials, has an appearance approximate to that of the real slice of fish, has appetizing look and feel and can be cooked freely. The present invention relates also to a production method of such a product.

Description of the Prior Art:

Fish has been rooted deeply in eating habits of people and has been served raw or as a slice for broiling, or boiling.

The slice of fish has bones and one must eat it while removing them. For this reason, children and the old are apt to keep away from fish. Another problem is that it is difficult to serve slices of fish which have a uniform size and have good appearance.

### SUMMARY OF THE INVENTION:

It is therefore an object of the present invention to provide an imitation product of a slice of fish which has appearance and taste and feel approximate to those of a real slice of fish, can be cooked freely, is easily edible because it has no bones and can be easily disintegrated and thus can prevent children's fastidiousness about fish, and also a production method of such a product.

It is another object of the present invention to provide an imitation product of a slice of fish and its production method, which can provide the imitation product of slices of fish having a uniform size and good appearance.

It is still another object of the present invention to provide an imitation product of a slice of fish and its production method, which is suitable for mass-production and can be supplied relatively economically.

These and other objects, features and advantages of the present invention will appear more fully from the following description when taken in conjunction with the accompanying drawings.

### BRIEF DESCRIPTION OF THE DRAWINGS:

Fig. 1 is a front view of an example of an imitation production of a slice of fish in accordance with the present invention;

Fig. 2 is a front view of another embodiment;
Fig. 3 shows a shaping orifice used in a production method of the product of the present invention; and
Figs. 4(A) ~ 4(C) show an example of the production method in accordance with the present invention.

### DETAILED DESCRIPTION OF THE PREFERRED EMBODIMENTS:

The most preferable embodiment of the present invention will be described in detail with reference to the accompanying drawings.

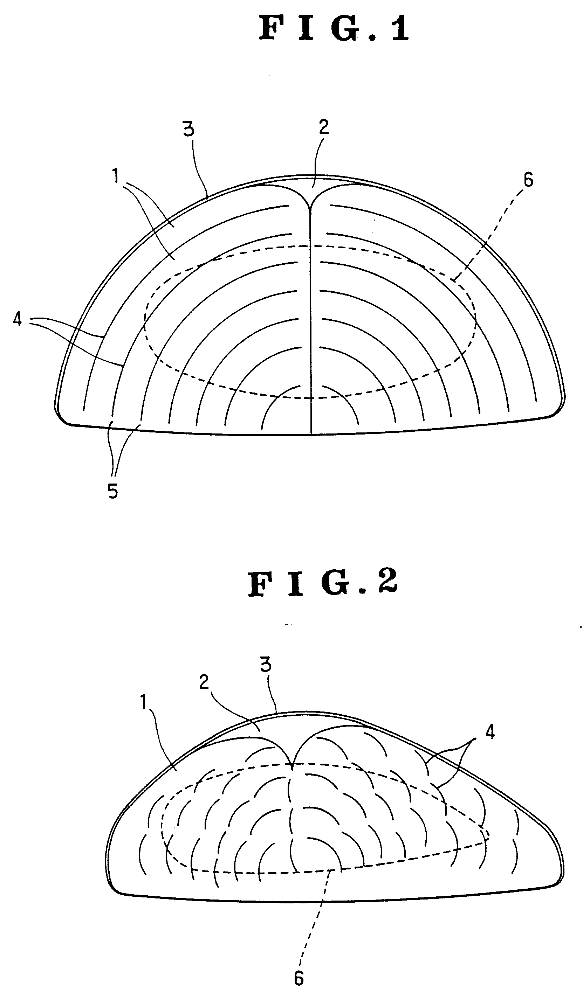

The product of the present invention is shaped in a shape consisting of a fish meat portion 1, a flesh portion 2 of a bloody color and a fish skin portion 3 as shown in Figs. 1 and 2 in the case of a salmon, a yellowtail, a cod, or the like. A large number of cut portions 4 are formed concentrically, for example, along the portions corresponding to portions between the fish meat layers in the fish meat portion 1. Uncut portions are left at both ends of the cut portions 4 lest the fish meat portion 1 is disintegrated. In cases, the cut portions 4 are formed not only from the front surface side but also from both front and back surfaces, and the depth of the cut portions 4 is arbitrary and penetrates completely to the back side in some cases. It is preferred to pack a peeling material capable of preventing the inner surfaces of the cut portions 4 from adhering completely to each other, such as oil, water, gelatin, starch, the white of an egg, and so forth, into the cut portion 4. It is also possible to wrap those foodstuffs 6 which are of different kind from but match well with the fish meat portion 1 such as potato, potato salad, cheese, ham, bacon, shrimp, cuttlefish, vegetables, etc, and are in good match with the fish meat portion 1 into the fish meat portion 6. The flesh portion 2 of a bloody color and the fish skin portion 3 may not exist in the case of a spearfish and a swordfish.

Next, an example of the production method of the present invention will be explained. Each of the constituent portions 1 ~ 3 in the product of the present invention comprises paste using the ground meat of fish, fish meat and/or vegetable fiber as its principal materials. This paste is obtained by adding appropriately starch, table salt, seasonings, the white of an egg, etc, to the fish meat of a walleye pollak or the like and mashing the mixture in the same way as in the case of kamaboko (boiled fish paste). The fibrous material is obtained by putting mainly the meat of fish having white meat such as an Atka mackerel or a cod to a meat collectin machine to remove the bones and heating the fish meat by steam. This heat treatment may be effected after shaping. After being covered to the flake-like form by a masher or a mixer, the fish meat is put into a cloth bag and squeezed, followed by treatment such as dehydration, deodoring, extraction of foreign matters, and so forth. The vegetable fiber is a fibrous material extracted from a natural vegetable fiber and a commercially available fiber can be used. Such a fibrous material is kneaded with the ground meat of the fish described above and the mixing ratio of the ground meat of the fish is set suitably to 15% or 30%, for example, in accordance with the kind of fish. In other words, the mixing ratio is set to a high level for fish having a soft meat and to a low level for fish having a hard meat. To provide the fish meat portion 1 with the flavor of the corresponding fish, the odor of smoking is allowed to permeate it and if necessary, the fish meat portion 1 is colored to the color approximate to that of the real fish. The flesh portion 2 of a bloody color and the fish skin portion 3 are colored to the suitable colors, respectively.

Several kinds (three, in the case of the embodiment described above) of pastes for forming each constituent portion obtained in the above-mentioned manner are then put into a shaping machine approximate to a paste shaping machine for kamaboko (boiled fish paste), are separately squeezed out while being shaped, laminated with one another at the outlet and fed out continuously. As will be described later, the formation of the cut portions 4 and the interposition of the peeling material are preferably carried out at this time of squeezing but the cut portions 4 may be made after the shaped article is cut lengthwise to a suitable thickness as a slice of the fish. In such a case, the cut portions 4 are formed by moving up and down an arcuate cutting edge (see Fig. 2), for example, and in this instance, the peeling material is caused to flow into the cut portions along the cutting edge, so as to form the peel layer. In this manner, it becomes possible to prevent the sliced fish meat portions 1 from adhering once again to one another and the fish meat portions 1 can be disintegrated easily at the time of eating. The formation of the cut portions 4 make it possible to provide the product with the appearance approximate to that of the real fish meat but also to improve permeation of the taste and heat-up. Shaping of the fish meat portions 1 and the like may be made by a method which pressure-feeds the paste described above into a mold. Particularly when other kinds of foodstuffs 6 described already are put into the meat, this molding method using the mold is effective.

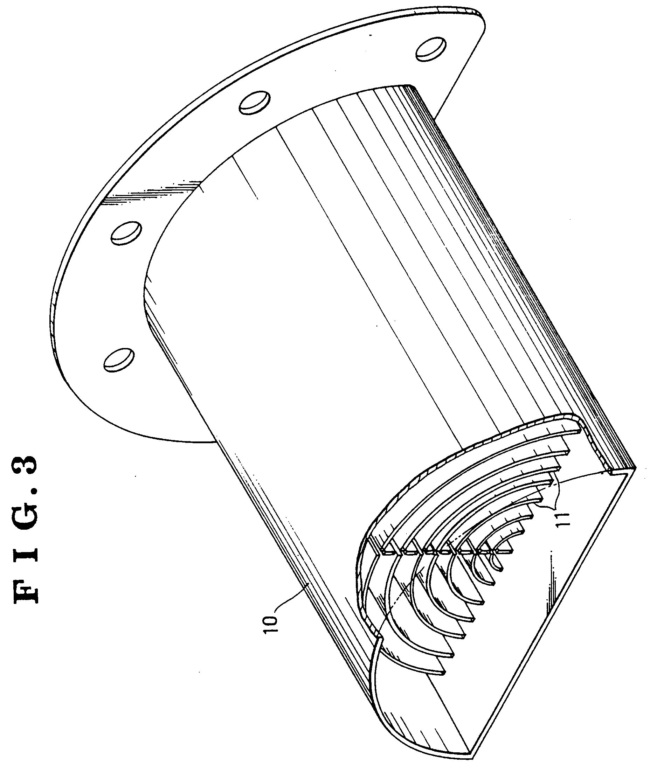

The most preferred production method of the product in accordance with the present invention is the method which squeezes out the paste described above from the shaping machine through a shaping orifice 10 such as shown in Fig. 3. In other words, the shaping orifice 10 is a cylinder having the shape of a slice of the fish meat and is equipped with a plurality of thin arcuate discharge ports corresponding to the shape between the meat layers of the fish meat portion and disposed concentrically, for example. The peeling material described above is discharged from each discharge port 11 simultaneously with squeeze of the paste. This means that the peeling material is sandwiched between the upper and lower pastes of each discharge port 11. According to this method, shaping of the paste, the formation of the cut portions (peel layers) and charging of the peel material can be made simultaneously and the remaining operation is only to cut the product to a suitable thickness. Accordingly, this method is believed to have high production efficiency and to be most suitable for mass-production.

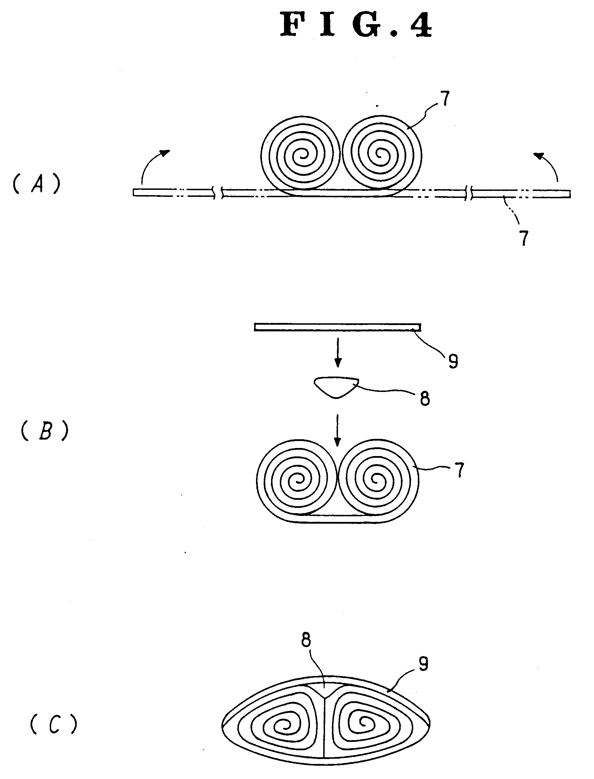

Next, another production method shown in Fig. 4 will be explained step-wise.

(1) Production of paste sheet:

A thin sheet 7 is produced by kneading a mixture of a greater amount of fibrous material and the ground meat of fish in the same way as described above.

(2) Application of peeling material:

It is preferred to apply or spray the aforementioned peeling material onto one, or both, surfaces of the sheet 7.

(3) Winding of sheet:

The sheet 7 is wound from both sides to establish a state where two elongated wound members are connected with each other (Fig. 4A). The winding quantity may be the same on both sides or may be greater on one side than on the other. During this winding work, the peel layer is formed between the sheets 7 by the peeling material described in item (2).

(4) Fixation of flesh portion having bloody color and fish skin portion:

Rod-like flesh portion 8 having a bloody color is fixed at the upper part, or both upper and lower parts, of the joint portion of the wound members and the fish skin portion 9 is deposited to the upper half portion of each of the two wound members (Fig. 4B). This step may be omitted or may be made after the next shaping step. If it is effected after the shaping step, the flesh portion 8 having the bloody color and the fish skin portion 9 are shaped in advance in shapes corresponding to the shape of the fixation portion.

(5) Shaping:

The two wound members are shaped in a desired shape of a slice (ordinarily, press molding) and the shape is trimmed. Thereafter, the two wound members are integrated completely (Fig. 4C).

(6) Slice:

The resulting molded article is sliced to a desired thickness.

According to this production method, the portion between the layers functions as the substitute for the cut portions 4 described above. Therefore, the cut portions generally need not be formed further.

The product related to this invention can be produced by employing thc single layer shaping orifice instead of the said multi-layer shaping orifice 10.

That is, the single layer-shaping orifice is arranged at appropriate intervals in the order of small one by separating one layer each of the above mentioned shaping orifice 10 and the step to apply or spray the peeling material is arranged between those shaping orifices.

After squeezing the paste sheet as described above from the 1st shaping orifice and applying or spraying the peeling material on it, the paste sheet squeezed out from the 2nd shaping orifice is deposited.

By reiterating the above processing after that, the multi-layer paste sheet is produced. Then any peeling material must not be applied or sprayed on the edge of both sides of the paste sheet for adhering the part.

Thus, such a long scale product may be sliced.

As described above, various methods of produing the product of the present invention can be conceived and hence, the invention is not particularly limited to the method described above.

The product in accordance with the present invention has the fish meat portion which has the similar feel to that of a real slice of fish and it has also the flesh portion having the bloody color and the fish skin portion. Moreover. since the peel layer is formed in the fish meat portion, the product can be easily disintegrated. Since it consists of the ground meat of fish and the fibrous material and since the flavor of the fish as the object of imitation of the present product is added, the feel and taste approximate to those to the real fish can be obtained. When eating, the product of the present invention can be eaten raw or can be cooked by broiling, boiling, and the like. It can also be preserved in miso.

**Claims**

1. An imitation product of a slice of fish characterized in that cut portions or portions analogous to said cut portions are formed appropriately in the fish meat portion obtained by kneading the ground meat of fish and fibrous material to obtain a paste and shaping the resulting paste into the sahpe of a slice of fish.

2. An imitation product of a slice of fish according to claim 1, wherein a peeling material capable of preventing mutual adhesion of said cut portions or said portion analogous to said cut portions, such as oil, water, gelatin, starch, the white of an egg, or the like, is interposed between said cut portions or said portions analogous to said cut portions.

3. A production method of an imitation product of a slice of fish characterized in that a paste is sequeezed out from a shaping orifice having a cylindrical shape exhibiting the shape of a slice of fish and having therein a plurality of thin arcuate discharge ports while discharging a peeling material from said discharge ports.

4. A production method of an imitation product of a slice of fish comprising:
disposing a sheet of a paste prepared by neading the ground meat of fish and a fibrous material;
widing up said sheet from both directions; bringing the wound members on both sides into contact with each other;
shaping them in a suitable shape; whenever necessary,
fixing a flesh portion having a bloody color and/or a fish skined portion; and
slicing the resulting product to a suitable thickness.

5. A production method of an imitation product of a slice of fish according to claim 4, wherein a peeling member capable of preventing mutual adhesion of said sheets such as oil, water, gelatin, starch, the white of an egg, or the like, is applied to one or both surfaces of said sheet of said paste, and said sheet is wound up from both directions.

# FIG.1

# FIG.2

# FIG.3

EP 0 494 318 A1

# F I G . 4

( A )

( B )

( C )

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | EP-A-0 307 232  (UNILEVER N.V.) <br> * Claims 1-21; examples 1-5 * <br> --- | 1-2 | A 23 L    1/325 |
| A | PATENT ABSTRACTS OF JAPAN, vol. 6, no. 68 (C-100)[946], 30th April 1982; & JP-A-57 8762 (MASAHARU MORI) 18-01-1982 <br> * Abstract * <br> ----- | 1 | |

TECHNICAL FIELDS
SEARCHED (Int. Cl.5)

A 23 L
A 23 P

~~The present search report has been drawn up for all claims~~

| Place of search | Date of completion of the search | Examiner |
|---|---|---|
| THE HAGUE | 07-12-1990 | SANTOS Y DIAZ A.I. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.............................................................
& : member of the same patent family, corresponding
   document

EPO FORM 1503 03.82 (P0401)

European Patent
Office

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## LACK OF UNITY OF INVENTION

The Search Division considers that the present European patent application does not comply with the requirement of unity of invention and relates to several inventions or groups of inventions,
namely:

see sheet -B-

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims: 1-3

European Patent
Office

EP 90 11 7370  -B-

## LACK OF UNITY OF INVENTION

1. Claims 1-3: Imitation of sliced fish, coextruding ground meat with a peeling material in between.

2. Claims 4-5: Imitation of sliced fish, rolling a sheet of ground meat + fibrous material.